# EUROPEAN PATENT APPLICATION

(11) **EP 4 502 452 A1**
(43) Date of publication of application: **05.02.2025**
(21) Application number: 23275116.4
(22) Date of filing: 03.08.2023
(51) Int. Cl.: F17C 13/00

(54) **STORAGE TANK**

(71) Applicant: Crompton Technology Group Limited, Oxfordshire, OX16 4XD (GB)
(72) Inventor: LIDDEL, Paul Daniel, Banbury, Oxfordshire, OX16 4XD (GB); BERNARD, James William, Banbury, Oxfordshire, OX16 4XD (GB)
(74) Representative: Dehns

(57) **Abstract**

A storage tank (2) is provided which includes a storage chamber (4) configured to store a working fluid such as for example a cryogenic fluid. The storage tank (2) has a first skin (6) forming the storage chamber (4) and a second skin (14) positioned radially outwardly of the first skin. An insulation cavity (22) is formed between the first skin and the second skin. A sensor (26) configured to detect the presence of a substance in the insulation cavity is provided, wherein the substance is usually present in an environment (24) external to the storage tank but not in the working fluid stored within the storage chamber.

## Description

### FIELD

The present disclosure relates generally to a storage tank, for example a storage tank for a cryogenic fluid, and to a method of detecting damage to the storage tank.

### BACKGROUND

It is known to store working fluids such as cryogenic liquids in double skinned storage tanks with a vacuum insulation layer provided between the two skins of the storage tank. Any damage to the storage tank may cause leakage of fluid into the insulation layer. This in turn may cause the working fluid to heat up and potentially boil, turning this into a gas with a significantly greater volume. This could potentially result in a significant loss of the stored working fluid or even an explosion.

An improved storage tank and way of detecting damage to such storage tanks is therefore required.

### SUMMARY

In accordance with an aspect of the disclosure, there is provided a storage tank comprising:
a storage chamber configured to store a working fluid;
a first skin forming the storage chamber;
a second skin positioned radially outwardly of the first skin;
an insulation cavity formed between the first skin and the second skin; and a sensor configured to detect the presence of a substance in the insulation cavity, wherein the substance is usually present in an environment external to the storage tank but not in the working fluid stored within the storage chamber.

The above storage tank is configured such that a substance leaking into the insulation cavity from the external environment may be detected, such that damage to the second skin of the storage tank may be detected. Thus, the storage tank according to the disclosure provides an effective means of detecting even relatively minor damage to the second, outer skin of the storage tank such that remedial or emergency action may be taken as needed.

Although the sensor could be configured to detect any suitable substance, in any example of the disclosure, the substance may be oxygen and / or nitrogen. In examples where the external environment is air and the working fluid is liquid hydrogen, the detection of either oxygen or nitrogen in the insulation cavity may indicate that air is leaking through the second, outer skin into the insulation cavity.

In any example of the disclosure, the sensor may only detect the substance from the external environment as described above. However, to aid in determining whether damage to the first skin has occurred, the sensor may also be configured to detect the presence of a component of the working fluid in the insulation cavity. In addition or alternatively, the storage tank may comprise a further sensor configured to detect the presence of a component of the working fluid in the insulation cavity.

It will be understood that a storage tank according to examples of the disclosure could be used to store many different working fluids. In any example of the disclosure however, the working fluid may be a cryogenic liquid, such as for example liquid nitrogen, helium, hydrogen, argon, methane, or carbon monoxide. In any example of the disclosure however, the working fluid may be liquid hydrogen.

In any example of the disclosure, the insulation cavity could for example be filled with insulating material. To provide optimum insulation for some working fluids however, in any example of the disclosure, the insulation cavity may be a vacuum insulation cavity.

In any example of the disclosure, the storage tank may comprise only one or more of the sensors described above. In some examples however, it may also be desirable to monitor a pressure in the insulation cavity and / or the storage chamber to identify potential damage to the storage tank. In any example of the disclosure, the storage tank may comprise one or more pressure sensors for measuring the pressure and / or a rate of change in the pressure in the insulation cavity and / or in the storage chamber.

In any example of the disclosure, the second skin may form the outer wall or perimeter of the storage tank. However, to improve the thermal properties thereof and / or for damage protection and / or for damage identification, in any example of the disclosure the storage tank may comprise a layer of foam provided radially outwardly of the second skin.

According to a further aspect of the disclosure, a safety system for a storage tank according to any example of the disclosure can be provided, wherein the safety system is configured to initiate an action when damage to the storage tank is detected. In any example of the disclosure, the action may include an automatic action, such as for example causing the storage chamber to be vented to the external atmosphere. In any example of the disclosure, the action may include alerting a user to damage to the storage tank.

In any example of the disclosure, the safety system can be configured to alert a user to damage to the second skin when the substance is detected in the insulation cavity or an increase in the concentration of the substance in the insulation cavity is detected. It will be understood that if a user is aware that the damage to the storage tank has been sustained by the second skin, they will be better able to repair the storage tank if possible than if they were not aware of the part of the storage tank which had been damaged.

In any example of the disclosure, the safety system may be configured to alert a user to damage to the first skin when a change in the pressure in the insulation cavity is detected but no substance has been detected or no change in the concentration of the substance in the insulation cavity is detected. The safety system may alternatively or additionally be configured to alert a user to damage to the first skin when a component of the working fluid or an increase in concentration of the component is detected in the insulation cavity. It will be understood that by being able to distinguish between damage sustained by the first and second skins of the storage tank, a user would be better able to repair the storage tank or respond in the most appropriate manner for the damage sustained.

It will be understood that a storage tank according to examples of the disclosure may be used for many different purposes. One possible use of a storage tank according to the disclosure is for storing fuel in a vehicle such as, for example, an aircraft. From a further aspect of the disclosure therefore, an aircraft may be provided comprising: a storage tank according to any example described above; and an engine supplied by the storage tank; and /or a safety system according to any of the examples described above.

When used in an aircraft, the storage tank according to the disclosure may provide a simple, lightweight and space saving apparatus for storing a working fluid such as a cryogenic fuel whilst monitoring the performance of the storage tank so as to provide a higher degree of safety for users of the aircraft.

From a still further aspect of the disclosure, a method of detecting damage to a storage tank according to any example of the disclosure is provided. The method comprises: operating the sensor to monitor for the presence of a substance and /or to measure a concentration of the substance in the insulation cavity; and detecting damage to the second skin when the substance is detected and / or when the concentration of the substance has increased.

The method may further comprise: monitoring the pressure in the insulation cavity and / or in the storage chamber; and detecting damage to the first skin when the pressure in the insulation cavity or the storage chamber has changed but no substance has been detected or there is no change in the concentration of the substance in the insulation cavity.

In any example of the disclosure, the method may comprise: operating the sensor or a further sensor to monitor for the presence of a component of the working fluid in the insulation cavity; and detecting damage to the first skin when the component of the working fluid is detected in the insulation cavity or when a concentration of the component of the working fluid in the insulation cavity has increased.

### BRIEF DESCRIPTION OF THE DRAWINGS

Various non-limiting examples will now be described, by way of example only, and with reference to the accompanying drawings in which:
Figure 1 shows a schematic cross section through a storage tank according to an example of the disclosure;
Figure 2 shows a safety system according to an example of the disclosure;
Figures 3A and 3B are schematic sectional views through part of a storage tank according to various examples of the disclosure; and
Figure 4 shows actions to be taken for different rates of change of pressure in an insulation cavity of a storage tank according to various examples of the disclosure.

### DETAILED DESCRIPTION

The present disclosure relates to double skinned storage tanks, for storing working fluids, for example cryogenic liquids such as liquid hydrogen, liquid nitrogen or liquid helium. Such storage tanks may for example be used to store liquid hydrogen for use as a fuel in various vehicles. In some examples, such storage tanks may be used in aerospace applications, for example to store liquid hydrogen fuel for use in an aircraft engine.

In any example of the disclosure, an insulation cavity is formed between the two skins of the double skinned storage tank. A vacuum may be formed in the insulation cavity as will be described further below. The vacuum insulation cavity may inhibit heat transfer from an outer skin of the storage tank to an inner skin thereof thus inhibiting heat transfer to the working fluid stored in the storage tank.

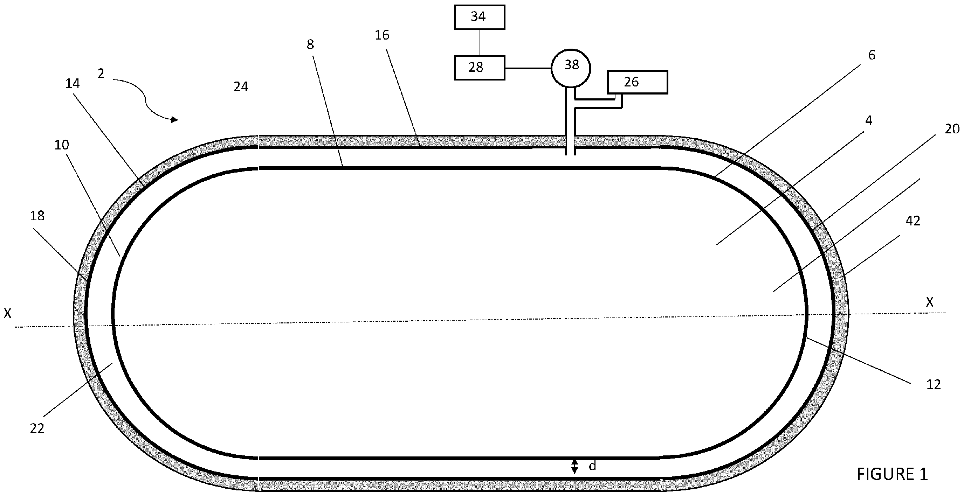

Figure 1 shows a schematic sectional view of a storage tank 2 (in one example a liquid hydrogen storage tank) according to an example of the present disclosure.

The storage tank 2 includes a storage chamber 4 which is configured to store a working fluid (liquid hydrogen in one example). In any example of the disclosure, the storage tank 2 may include one or more openings (not shown) for supplying working fluid, liquid and / or gas to the storage chamber 4 and / or for removing working fluid, liquid and / or gas from the storage chamber 4. In any example of the disclosure, the openings may be sealed, for example by valves (not shown) which can be closed to stop working fluid, liquid and / or gas escaping from the chamber 4 when it is not meant to do so. In any example, the valves can be opened to allow working fluid to be supplied to a desired location (for example an engine) from the storage chamber 4 or to be supplied to the storage chamber 4 (for example to refill the storage tank 2) when required.

The storage tank 2 includes a first skin 6 which forms the storage chamber 4. The first skin 6 may surround and /or enclose the storage chamber 2. The first skin 6 may be made of any suitable material. At least in some examples, the first skin 6 may be made of a composite material. The composite material may be made up of fibres embedded in a resin. In various non-limiting examples, the composite material may be a thermoset material (e.g. an epoxy) or a thermoplastic material (e.g. PEEK or PAEK type material) reinforced with carbon, glass or aramid fibres..

The storage chamber 4 could be any suitable shape. In examples, the chamber 4 is formed with a regular shape. In examples, the chamber 4 is formed with a rounded regular shape. In examples, the chamber 4 is formed with a spherical shape or an elipsoid shape. In examples and as shown in Figure 1, the chamber 4 is formed in the shape of a cylinder with rounded ends. In the example shown therefore, the first skin 6 forms a hollow cylinder with rounded ends. The first skin 6 may form a shape which is coaxial with the chamber 4. The first skin 6 in the example shown has a main portion 8 extending around and along a central axis X-X to form a cylindrical shape. The main portion 8 is joined at either axial end thereof to respective end portions 10 ,12. The end portions 10 ,12 are rounded and, in the example shown, are approximately hemispherical. The main portion 8 and end portions 10 ,12 together form a closed body surrounding the chamber 4.

The storage tank 2 includes a second skin 14 which is positioned radially outwardly of the first skin 6. The second skin 14 may surround the first skin 6. The second skin 14 may enclose the first skin 6. The second skin 14 may form a radially outer wall or periphery of the storage tank 2. The second skin 14 may be made of any suitable material. At least in some examples, the second skin 14 may be made of a composite material. The composite material may be made up of fibres embedded in a resin. In various non-limiting examples, the composite material may be a thermoset material (e.g. an epoxy) or a thermoplastic material (e.g. PEEK or PAEK type material) reinforced with carbon, glass or aramid fibres..

The second skin 14 may be formed into a spherical shape or an elipsoid shape. The second skin 14 may form a shape which is coaxial with the chamber 4. The second skin 14 may follow the shape of the first skin 6. However, the second skin 14 may deviate from the shape of the first skin 6 over parts thereof as required. For example, if an object one or more objects such as sensors are required to be housed in the insulation cavity 22, the second skin 14 may be formed to conform around the object or the one or more objects. In examples and as shown in Figure 1, the second skin 14 is formed in the shape of a cylinder with rounded ends. In the example shown therefore, the second skin 14 forms a hollow cylinder with rounded ends. The second skin 14 has a main portion 16 extending around and along the central axis X-X. The main portion 8 is joined at either axial end thereof to respective end portions 18 , 20. The end portions 18 , 20 are rounded and, in the example shown, are approximately hemispherical. The main portion 16 and end portions 18, 20 together form a closed body surrounding the first skin 6.

The first skin 6 and the second skin 14 are radially spaced from each other such that an insulation cavity 22 is formed between the first skin 6 and the second skin 14. The spacing between the first skin 6 and the second skin 14 may vary over the extent of the storage tank 2. In some examples however, the first skin 6 and the second skin 14 may be radially spaced from each other by a constant distance d over some or all of the surface area of the first skin 6.

In any example of the disclosure, the insulation cavity 22 may be a vacuum insulation cavity. In other words, a vacuum may be formed in the cavity between the first skin 6 and the second skin 14. The vacuum may be beneficial in stopping heat transfer from an external environment 24 (in other words, the environment external to or radially outward of the second skin 14) to the working fluid stored inside the storage chamber 4. Any suitable strength of vacuum may be used, In some examples, the vacuum may be in the range of about 10mbar to 4 mbar (about 1KPa to 0.4KPa).

Cryogenic fluids are typically stored at very cold temperatures. For example, Hydrogen only exists in liquid form over a small temperature range of about 14°K to about 20°K (about -259°C to about -252°C). This is the case even at high pressures. Thus, when stored in a storage tank 2 according to an example of the disclosure liquid hydrogen would need to be maintained at a temperature of between about 14°K to about 20°K. To insulate the liquid hydrogen or other working fluid from the external environment 24 so as to avoid heating the working fluid in the storage chamber 4, it is important to maintain the integrity of the vacuum in the insulation cavity 22.

In the example in which the working fluid is liquid hydrogen, a difference in temperature between the external environment 24 and the liquid hydrogen inside the storage chamber 4 may typically be 200°C or more. Thus, any reduction in the integrity of the vacuum in the insulation cavity 22 would lead to a loss in the insulative properties of the insulation cavity and a resulting increase in heat introduced into the liquid hydrogen from the ambient or external environment 24. This in turn may result in rapid evaporation and expansion of the liquid hydrogen to gaseous hydrogen. This may result in tank rupture or worse due to the large difference in relative volumes of liquid and gaseous hydrogen.

It will be appreciated that any damage to either the first skin 6 or the second skin 14 which allows leakage therethrough (for example due to a crack in the material of the skin) may potentially cause a reduction in the integrity of the vacuum in the insulation cavity 22. It is therefore desirable to monitor the storage tank 2 for signs of such damage such that remedial action may be taken early to avoid any potentially serious damage developing. It will be understood that within the context of the present application, damage is intended to include damage sustained due to impact events and also gradual damage from wear caused for example by thermal expansion and contraction or various environmental factors.

In any example of the disclosure, the storage tank 2 may be monitored by maintenance personnel and /or by an automated system such as the safety system described below.

In many situations, the storage tank 2 will be located in ambient air or a similar external environment 24. In other examples however, the storage tank 2 may be surrounded by another medium such as water for example. The storage tank 2 includes a sensor 26 configured to detect the presence of a substance (for example a particular type of molecule or a particular type of particle) in the insulation cavity 22, wherein the substance is usually present in the external environment 24 but not in the working fluid stored within the storage chamber 4. In any example of the disclosure, and for example when the working fluid is liquid hydrogen and the external environment 24 is air or water, the substance may be oxygen and / or nitrogen. The sensor 26 may be configured to detect oxygen and / or nitrogen, for example oxygen particles and /or nitrogen particles.

When the integrity of the vacuum in the insulation cavity 22 is good (for example when the vacuum is in the range of about 1 KPa to 0.4KPa) the sensor 26 will not typically detect any of the substance in the insulation cavity 22. However, in the event of damage to the second skin 14 allowing fluid, particles or molecules from the external environment (including the substance) to pass through the second skin 16 into the insulation cavity 22, the integrity of the vacuum in the insulation cavity will be reduced. Correspondingly, the sensor 26 will detect the presence of the substance in the insulation cavity 22.

In any example of the disclosure, the sensor 26 may be configured to intermittently, regularly or continuously monitor the insulation cavity 22 to detect the presence of the substance in the insulation cavity 22. The sensor 26 may be configured only to detect the presence of the substance in the insulation cavity 22 (in other words, to detect the substance directly) or to detect the presence of the substance in the insulation cavity 22 by measuring the concentration of the substance in the insulation cavity 22.

In some examples of the disclosure, data from the sensor 26 may be stored in a data recorder 28 and subsequently reviewed by a user, for example maintenance personnel. The data recorder 28 may be provided adjacent to the storage tank 2 and external thereto. In other examples, the data recorder 28 may be located at a position which is removed from the storage tank 2, for example at a different position within an aircraft or in a control centre, for example a building which is entirely separate. In any example, a wired or wireless connection (not shown) may be provided between the sensor 26 and the data recorder 28.

The detection of the substance or an increase in the concentration of the substance in the insulation cavity 22 will alert the user to damage to the second skin 16 of the storage tank 2. The user may then determine what (if any) remedial action is required.

In some examples, a safety system (not shown) may be provided for initiating an action when damage to the storage tank 2 is detected. It will be understood that the safety system may include one or more processors such as processor 34 described below and / or other computer program products for carrying out the method steps described below. In any example the safety system may be configured to initiate automatic action, such as for example causing the storage chamber 4 to be vented to the external atmosphere, when damage to the storage tank 2 is detected. The safety system may additionally or alternatively include an indicator 30 for alerting a user (for example maintenance personnel or other staff) to damage to the storage tank 2.

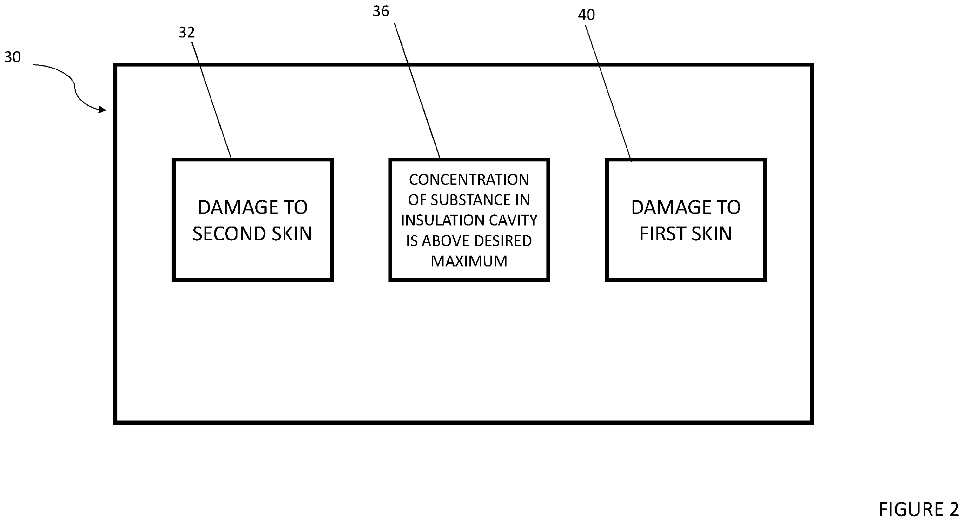

An example indicator 30 is shown schematically in Figure 2. It will be understood that the indicator 30 could be located adjacent to the storage tank 2 or, in other examples, the indicator 30 could be located at a distance from the storage tank 2, for example in a control centre. In any example, a wired or wireless connection (not shown) may be provided between the sensor 26 and the safety system. In any example, the safety system may be configured to initiate an action, for example to alert the user, in response to damage to the second skin 16 being detected. In any example, the safety system may be configured to alert the user via the indicator 30. The safety system may determine that there has been damage to the second skin 16 and take action accordingly (for example by alerting a user to the damage) when the substance is detected in the insulation cavity 22 or when the concentration of the substance in the insulation cavity 22 has increased. The indicator 30 of the safety system may for example display a first message 32, emit a flashing light and /or emit an audible alarm signal to alert the user to damage to the second skin 16. In some examples of the disclosure, the storage tank 2 may be in a vehicle (not shown) and the safety system may be configured to alert the user, for example to damage to the storage tank 2, via a control panel (not shown) of the vehicle. In any example of the disclosure, the control panel may be visible to a user driving or flying the vehicle. In any example of the disclosure, the control panel may be located on a dashboard (not shown) of the vehicle and / or in the cockpit (not shown) thereof.

A processor 34 as shown in Figure 1 may be provided. The processor 34 may be configured to receive data or signals from the sensor 26. The processor 34 may be configured to analyse the data or signals and to determine whether a concentration of the substance detected in the insulation cavity 22 is above a desired maximum value. The processor 34 may be configured to cause the safety system to take an action, for example to alert a user, when the concentration of the substance detected in the insulation cavity 22 is above the desired maximum value. In this example, the safety system may be configured to provide an additional signal 36 (for example, via the indicator 30) to alert a user when the concentration of the substance detected in the insulation cavity 22 is above the desired maximum value as shown in Figure 2. In other examples, the safety system may be configured to only initiate an action when the detected concentration of the substance indicates that remedial action (for example to repair the second skin 16 or, in an emergency situation, to empty the storage chamber 4) should be taken.

In any example of the disclosure, a pressure sensor 38 may be provided for sensing a change in the pressure in the insulation cavity 22. It will be understood that a change in pressure in the insulation cavity 22 could indicate damage to either the first skin 6 or the second skin 16.

In any example of the disclosure, the pressure sensor 38 may be configured to measure the rate of change of the pressure in the insulation cavity 22. The safety system may be configured to initiate an emergency action, for example to generate an alarm indicating that immediate action is required or to empty the storage chamber 4, when the measured rate of change of the pressure in the insulation cavity 22 is above a predetermined threshold. The safety system may also or alternatively be configured to initiate an alternative action, for example to generate a signal indicating that no immediate action is required but that minor damage to the storage tank which requires attention has occurred, when the measured rate of change of the pressure in the insulation cavity 22 is below the predetermined threshold but above a minimum value.

In any example of the disclosure, a storage chamber pressure sensor (not shown) may be provided for sensing a change in the pressure in the storage chamber 4. It will be understood that a reduction in pressure in the storage chamber 4 could indicate damage to the first skin 6. An increase in pressure in the storage chamber 4 could indicate damage to either the first skin 6 or the second skin 16.

In any example of the disclosure, the storage chamber pressure sensor may be configured to measure the rate of change of the pressure in the storage chamber 4. The safety system may be configured to initiate an emergency action, for example to generate an alarm indicating that immediate action is required, when the measured rate of change of the pressure in the storage chamber 4 is above a predetermined threshold. The safety system may also or alternatively be configured to initiate an alternative action, for example to generate a signal indicating that no immediate action is required but that minor damage to the storage tank 2 which requires attention has occurred when the measured rate of change of the pressure in the storage chamber 4 is below the predetermined threshold but above a minimum value.

It will be understood that any small increases in the pressure within the insulation cavity 22 expected from the design of the storage tank 2 as a result of expected permeation or acceptable microleaks in either the first or the second skin 6, 14 will be predetermined and considered when assessing the vacuum quality over time and whether the increase in pressure indicates damage to one of the first and second skins 6, 14.

In any example of the disclosure, the sensor 26 can be configured to also detect a component of the working fluid in the insulation cavity 22. In any example of the disclosure, the component of the working fluid may be a second substance which is not usually found in the external environment 24. It will be understood that in any example, a separate sensor (not shown) for detecting the component of the working fluid in the insulation cavity 22 could instead be provided. Detection of the component of the working fluid in the insulation cavity 22 would typically indicate damage to the first skin 6.

In any example of the disclosure, the processor 34 may be configured to determine that the first skin 6 has been damaged when the pressure sensor 38 senses a change in the pressure in the insulation cavity 22 but there is no change in the concentration of the substance in the insulation cavity 22, or none of the substance is detected by the sensor 26.

In any example of the disclosure, the processor 34 may be configured to determine that the first skin 6 has been damaged when the sensor 26 or a further sensor (not shown) detects the component of the working fluid in the insulation cavity 22.

The safety system may be configured to initiate an action, for example to provide a signal 40 to alert a user to damage to the first skin 6 when the processor 34 determines that the first skin 6 has been damaged and / or when the sensor 26 or a further sensor detects a component of the working fluid in the insulation cavity 22 or detects an increase in concentration of the component of the working fluid in the insulation cavity 22.

It will be understood that in any example of the disclosure, the sensor 26 and / or the further sensor and / or the pressure sensor 38 may be located within the insulation cavity 22. Alternatively, any one or more of the sensor 26 and / or the further sensor and / or the pressure sensor 38 may be located externally of the second skin 14 and may be connected to the insulation cavity 22 via a sealed conduit

In any example of the disclosure, the storage tank 2 may comprise a layer of foam 42. The layer of foam 42 may be provided radially outwardly of the second skin 14. The layer of foam 42 may be in contact with the second skin 14. The layer of foam 42 may be held against the second skin 14. For example, the layer of foam 42 may be bonded to the second skin 14, for example by an adhesive. The layer of foam 42 may extend over a part of the second skin 14. In the example shown, the layer of foam 42 covers all of the second skin 14, or in other words, it may extend over the full extent of the second skin 14 or the outer surface of the storage tank 2.

In any example of the disclosure the foam may be a spray-on type of foam or may be formed to a required shape (for example by machining) and applied to the second skin 14 either in one piece or in sections. The type of foam used for the foam layer 42 may vary. In some examples, low density polyurethane (PU) type foams may be used. These offer good thermal and cryogenic insulation. They are low density and as such low weight which may be advantageous in some examples, for example in aerospace applications. In other examples, mid-high density PU foams may be used. These still offer good insulation but have better mechanical performance and so will provide greater protection against damage to the second skin 16 due to impact.

In any example of the disclosure, it is desirable that the foam used should be compatible with any bonding systems and / or adhesives used to bond the foam layer 42 to the second skin 16. This may allow easy anchorage to the tank itself and aid repair / replacement of any section subjected to sub-critical impact.

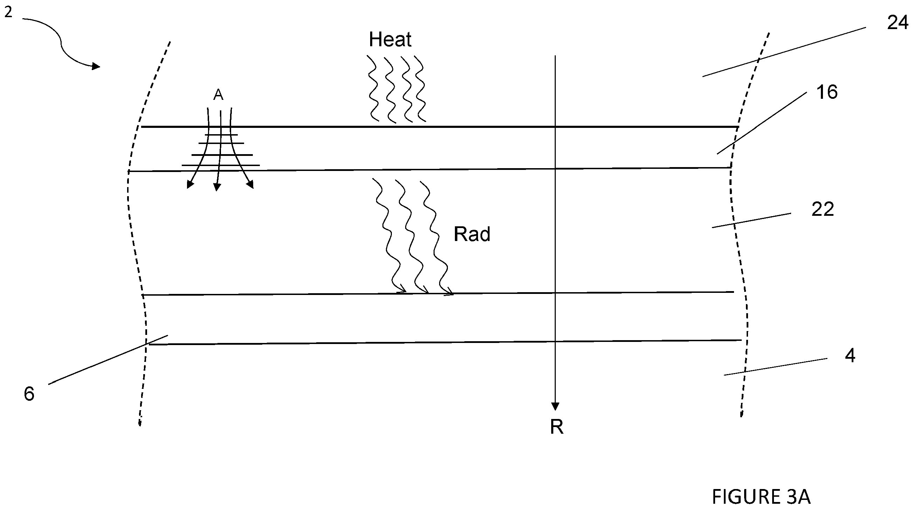

Figure 3A is a schematic sectional view through part of a storage tank 2 according to an example of the disclosure but with the foam layer removed. A storage chamber 4 is enclosed by the first skin 6 as described above. The first skin 6 is radially inward of the second skin 16 (where the radially inward direction is shown by the arrow R in Figure 3A) and a vacuum insulation cavity 22 is formed between the first skin 6 and the second skin 16 as described previously. It will be appreciated that the other features of the storage tank 2 may also include those features described above.

As seen in Figure 3A, the second skin 16 forms the outer surface of the storage tank 2 such that it is unprotected from damage, for example due to impact from an object being dropped onto the storage tank 2. Thus, a relatively low energy impact event on the outer surface of the storage tank 2 may cause significant damage to the outer skin 16, where significant damage could for example mean that the damage causes a leak from the external environment 24 into the insulation cavity 22 as shown at A.

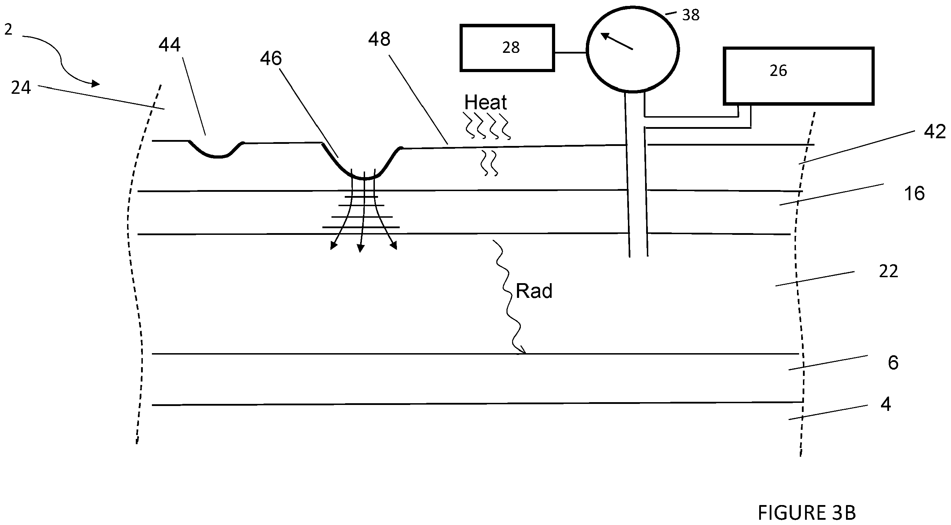

Figure 3B is a schematic sectional view through an outer wall of the storage tank 2 of Figure 3A in which a foam layer 42 is provided over and radially outwardly of the second skin 16. The foam layer 42 may provide protection against damage from impact events. A low energy or relatively low energy impact may merely cause an indent 44 to be formed in the foam layer 42. In such a case, no damage to the second skin 16 may be incurred such that no leakage into the insulation cavity 22 will occur. However, the indent 44 may be visible to the human eye. In any example, an indent in the foam could for example have a depth of between about 0.2mm and 2.5mm. In any example, the indent 44 can be identified by maintenance personnel or others inspecting the storage tank 2. The indent 44 may prompt a further inspection of the second skin 16 at or adjacent the location of the indent 44 and /or maintenance actions such as a repair to the second skin 16 if required. The indent 44 may also provide useful information in identifying locations at which impacts occur and looking for ways to mitigate against this.

In the event of a higher energy impact event on the storage tank 2, the foam layer 42 may not be sufficient to protect against damage to the second skin 16. However, in this instance, a mark or indent 46 will again be created. This mark or indent 46 may allow maintenance personnel to identify that the second skin 16 has been damaged. In alternative examples in which the damage to the outer skin 16 is identified by other means such as by the sensor and method described herein, the mark or indent 46 may enable maintenance personnel to quickly locate the site of the damage to the second skin 16 and to carry out repairs at that site. In some examples, it may be possible to merely apply a layer of resin to the second skin 16 in the region of the indent 46 and thus repair the storage tank 2.

In addition or alternatively to the impact protection provided by the foam layer 42 and described above, the foam layer 42 may also act to provide insulation to reduce the heat which may travel from the external environment 24 to the working fluid stored in the storage chamber 4 of the storage tank 2. As seen in Figure 3A, when no foam layer 42 is provided, heat is received by the second skin 16 by radiation, and / or by convection and / or (if in contact with another body) by conduction from any heat source external to the storage tank 2. Any heat received by the second skin 16 may act to increase the temperature differential between the first skin 6 and the second skin 16 such that a greater amount of heat may be transferred across the insulation cavity 22 from the first skin 6 to the second skin 16 by radiation (shown schematically by arrows Rad). It will be understood that when a greater amount of heat is transferred across the insulation cavity 22 this will increase the amount of heat which will travel from the external environment 24 to the working fluid in the storage tank 4.

In contrast to this and as shown in Figure 3B, when a foam layer 42 is provided, much of the heat received at the radially outer surface 48 of the foam layer 42 is dissipated before reaching the second skin 16, thus reducing the amount of heat which reaches the inner skin 6 by radiation (shown schematically by arrow Rad) and so improving the insulative properties of the storage tank 2.

A method of detecting damage to a storage tank, for example a storage tank 2 according to any example of the disclosure and as described above, will now be described. The method includes operating the sensor 26 to monitor for the presence of a substance and /or to measure a concentration of the substance in the insulation cavity 22. Damage to the second skin 16 is then detected or determined to have occurred when the substance is detected and / or when the concentration of the substance has increased.

In addition to the above, the method may include monitoring the pressure in the insulation cavity 22 and / or in the storage chamber 4 and detecting damage to the first skin 6 when the pressure in the insulation cavity 22 or the storage chamber 4 has changed but no substance has been detected or there is no change in the concentration of the substance in the insulation cavity 22. The method can also or alternatively include operating the sensor 26 or the further sensor to monitor for the presence of a component of the working fluid in the insulation cavity 22. Damage to the first skin 6 is then detected or determined to have occurred when the component of the working fluid is detected in the insulation cavity 22 or when a concentration of the component of the working fluid in the insulation cavity 22 has increased.

It will be understood that the method may be used as often as required and, at least in some examples, the sensors may operate continuously or at regular intervals so as to monitor the condition of a storage tank over time and to detect any damage that occurs to the storage tank at the time that it occurs or shortly afterwards. In other examples, the sensors could be operated on demand, for example being activated by maintenance personnel either working remotely or at the site of the storage tank 2, rather than operating continuously or intermittently.

It will be understood that because even very small amounts or concentrations of the substance and / or the component of the working fluid in the insulation cavity 22 may be detected by the sensors, damage to the first and / or the second skin may potentially be identified and acted upon at a very early stage, potentially before any significant reduction in the insulating properties of the storage tank have occurred and before any significant leak of the working fluid.

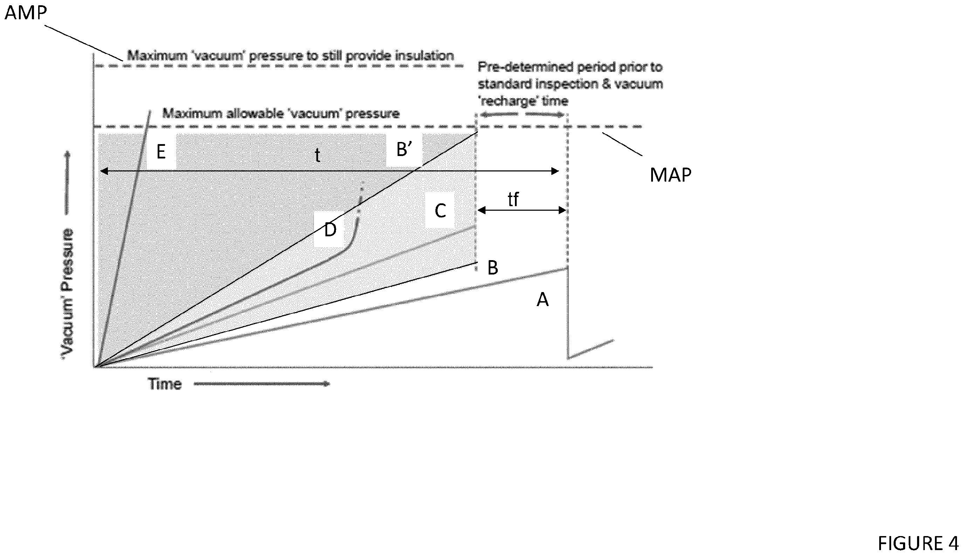

In any example of the disclosure, the method may include monitoring a rate of change of the pressure in the insulation cavity 22 or the storage chamber 4. Figure 4 is a schematic graphical representation showing actions to be taken for different measured rates of change of the pressure in the insulation cavity 22.

Line A represents a possible change of the pressure in the insulation cavity 22 over time, due for example to permeation of gaseous substances through the first and second skins 6, 14 when undamaged. As seen in Figure 4, when the measured rate of change of the pressure in the insulation cavity 22 is at or below the level shown by line B (for example such that it falls within the white portion of the graph as does line A), no remedial action need be taken until a standard length of time t has elapsed, after which routine maintenance checks can be carried out and / or the vacuum in the insulation cavity 22 may be recharged or topped up.

In any example, the safety system may be configured to operate to a maximum allowable vacuum pressure in the insulation cavity 22. The maximum allowable vacuum pressure is shown in Figure 3 by the dotted line MAP. The maximum allowable vacuum pressure may be a value determined as a safe level at which the insulation cavity and the storage tank will operate safely. In some examples such as that shown in Figure 3, the maximum allowable vacuum pressure may be set at a lower value than the actual maximum vacuum pressure at which an acceptable level of insulation would be provided (shown by line AMP in Figure 4) so as to provide an additional safety buffer. In any example, the safety system may be configured to determine whether the measured rate of change in pressure in the insulation cavity 22 will cause the pressure in the insulation cavity to reach the maximum allowable vacuum pressure within a predetermined time t. In any instance where safety system determines that the measured rate of change in pressure in the insulation cavity 22 will cause the pressure in the insulation cavity to reach the maximum allowable vacuum pressure within a predetermined time t, the safety system may be configured to take remedial or emergency action, for example in the manner described below.

In any example, the safety system may be configured to compare the rate of change in the measured pressure in the insulation cavity 22 to the remedial threshold value and to initiate a remedial action when the rate of change in the measured pressure exceeds the remedial threshold value. In any example, the remedial action may be using the indicator 30 to alert a user to the fact that remedial action is required. This could be through the first signal 34 provided by the indicator 30 or through a further signal 38 showing that remedial action is required. In addition or alternatively, the remedial action could include rescheduling inspection and / or maintenance of the storage tank 2 so as to do this sooner than it would normally be done. The remedial action could alternatively or additionally include carrying out repairs to the storage tank and / or renewing the vacuum in the insulation cavity 22.

Line C in Figure 4 represents a slightly higher measured rate of change in the pressure in the insulation cavity 22. This rate of change is above the remedial threshold value line B but is well below the line B' of the emergency threshold value as will be described below such that it may indicate that some not very significant damage has occurred to the storage tank 2 that will not likely result in an emergency situation. In other words the measure rate of change would not result in a pressure rise above the maximum allowable vacuum pressure determined for the storage tank 2 within the standard length of time t. In such cases, the pressure rise should be assessed and inspection and maintenance should be re-scheduled (brought forward by a time tf) appropriately.

It will be understood that in any example of the disclosure, if the measured pressure in the insulation cavity 22 is found to be greater than the remedial threshold value, it may also be compared to an emergency threshold value. In such cases, the safety system may be configured to initiate the remedial action only when the measured pressure in the insulation cavity 22 is found to be greater than the remedial threshold value and lower than the emergency threshold value.

In any example of the disclosure, the safety system can be configured to compare a rate of change in the measured pressure to an emergency threshold value and to initiate an emergency action when the rate of change in the measured pressure exceeds the emergency threshold value. The emergency threshold value may correspond to a rate of change in the measured pressure in the cavity which indicates that an emergency event may occur or in other words that serious damage requiring prompt or immediate attention has been incurred by the storage tank. In any example, the emergency threshold value may be higher than the remedial threshold value.

Line D in Figure 4 again represents a slightly higher measured rate of change in the pressure in the insulation cavity 22, again indicating that less significant damage has occurred as for line C. However, if the rate of pressure rise increases over time (as seen at line D in the dotted portion thereof) so that the predicted pressure increase (shown by the dotted line) will become much greater, potentially causing an emergency event to occur, immediate action is then required. It will be appreciated that such an increase in the rate of change of pressure may only be identified where the safety system is configured to monitor the rate of change in pressure over time and to regularly or constantly compare the rate of change as determined at a given time to a required threshold value, such as the remedial threshold value, the emergency threshold value or both of these values.

In some other examples, the measured rate of change in the pressure in the insulation cavity 22 may be constant and may be high or rapid such that it is above the emergency threshold value B' as shown by line E. In such cases, this may indicate that significant damage has occurred such that immediate or emergency action is required.

In any case where it is determined that the rate of change is too high or that emergency action is required, the emergency action may include the indicator 30 providing a signal 40 showing that emergency action is required. Alternatively, an alarm or other signal may be generated. In other examples, the storage tank 2 may be caused to automatically vent to the external environment 24 when it is determined that emergency action is required or that the measured rate of change in the pressure in the insulation cavity 22 is too high.

In any case where it is determined that the rate of change is too high or that immediate action is required, an alarm or other signal may be generated. In other examples, the storage tank 2 may be caused to automatically vent to the external environment 24 when it is determined that immediate action is required or that the measured rate of change in the pressure in the insulation cavity 22 is too high.

In still further examples, the method of detecting damage to the storage tank 2 may include inspecting a foam layer 42 on a radially outer surface of the storage tank 2 for marks or indents 42, 46 which may indicate that the second skin 16 has been damaged, for example by an impact event.

It will be understood that the safety system and methods described herein may be implemented using any suitable processor and / or computer program product. For example a computer program product may be provided comprising instructions which, when the program is executed by a processor, cause the processor to carry out a method according to any example of the disclosure.

Although the present disclosure has been described with reference to various examples, it will be understood by those skilled in the art that various changes in form and detail may be made without departing from the scope of the disclosure as set forth in the accompanying claims.

## Claims

1. A storage tank comprising:
a storage chamber configured to store a working fluid;
a first skin forming the storage chamber;
a second skin positioned radially outwardly of the first skin;
an insulation cavity formed between the first skin and the second skin; and
a sensor configured to detect the presence of a substance in the insulation cavity, wherein the substance is usually present in an environment external to the storage tank but not in the working fluid stored within the storage chamber.

2. A storage tank as claimed in claim 1, wherein the substance is oxygen and / or nitrogen.

3. A storage tank as claimed in claim 1 or 2, wherein the sensor is also configured to detect the presence of a component of the working fluid in the insulation cavity, and / or wherein the storage tank comprises a further sensor configured to detect the presence of a component of the working fluid in the insulation cavity.

4. A storage tank as claimed in claim 1, 2 or 3, wherein the working fluid is a cryogenic liquid, optionally wherein the cryogenic liquid is liquid hydrogen.

5. A storage tank as claimed in any preceding claim, wherein the insulation cavity is a vacuum insulation cavity.

6. A storage tank as claimed in any preceding claim, comprising one or more pressure sensors for measuring the pressure and / or a rate of change in the pressure in the insulation cavity and / or in the storage chamber.

7. A storage tank as claimed in any preceding claim, comprising a layer of foam provided radially outwardly of the second skin.

8. A safety system for a storage tank as claimed in any preceding claim,
wherein the safety system is configured to initiate an action when damage to the storage tank is detected.

9. A safety system as claimed in claim 8, wherein the action comprises at least one of causing the storage chamber to be vented to the external atmosphere and alerting a user to damage to the storage tank.

10. A safety system as claimed in claim 8 or 9, wherein the safety system is configured to alert a user to damage to the second skin when the substance is detected in the insulation cavity or an increase in the concentration of the substance in the insulation cavity is detected.

11. A safety system as claimed in claim 8, 9 or 10 , wherein the safety system is configured to alert a user to damage to the first skin when a change in the pressure in the insulation cavity is detected but no substance has been detected or no change in the concentration of the substance in the insulation cavity is detected; and / or
when a component of the working fluid or an increase in concentration of the component is detected in the insulation cavity.

12. An aircraft comprising:
a storage tank as claimed in any of claims 1 to 7; and
an engine supplied by the storage tank; and /or
a safety system as claimed in any of claims 8 to 11.

13. A method of detecting damage to a storage tank as claimed in claim 1, the method comprising:
operating the sensor to monitor for the presence of a substance and /or to measure a concentration of the substance in the insulation cavity; and
detecting damage to the second skin when the substance is detected and / or when the concentration of the substance has increased.

14. A method as claimed in claim 13, comprising:
monitoring the pressure in the insulation cavity and / or in the storage chamber; and
detecting damage to the first skin when the pressure in the insulation cavity or the storage chamber has changed but no substance has been detected or there is no change in the concentration of the substance in the insulation cavity.

15. A method as claimed in claim 13 or 14, comprising:
operating the sensor or a further sensor to monitor for the presence of a component of the working fluid in the insulation cavity; and
detecting damage to the first skin when the component of the working fluid is detected in the insulation cavity or when a concentration of the component of the working fluid in the insulation cavity has increased.
